# EUROPÄISCHE PATENTSCHRIFT

(11) **EP 0 623 495 B1**
(45) Veröffentlichungstag und Bekanntmachung des Hinweises auf die Patenterteilung: **18.12.1996**
(21) Anmeldenummer: 94104155.0
(22) Anmeldetag: 17.03.1994
(51) Int. Cl.: B60R 25/02

(54) **Lenkschloss**
Steering lock
Serrure de direction

(30) Priorität: 06.05.1993 DE 4314931
(43) Veröffentlichungstag der Anmeldung: 09.11.1994
(73) Patentinhaber: Valeo Deutschland GmbH & Co. Sicherheitssysteme, 85253 Erdweg (DE)
(72) Erfinder: Themel, Friedwald, D-86561 Aresing (DE); Schmatz, Thomas, D-80997 München (DE); Priwitzer, Günther, D-74613 Öhringen (DE)
(74) Vertreter: COHAUSZ HASE DAWIDOWICZ & PARTNER

(56) Entgegenhaltungen:
- EP-A- 0 093 295
- EP-A- 0 265 826
- EP-A- 0 268 879
- WO-A-83/03082
- FR-A- 2 456 644
- GB-A- 270 198

## Beschreibung

Die Erfindung betrifft ein Lenkschloß für ein Kraftfahrzeug mit einem Gesperre, das bei abgestelltem Fahrzeug die Drehbarkeit der Lenkwelle inbeiden Drehrichtungen blockiert.

Es ist bekannt, die Lenkwelle einer Kraftfahrzeuglenksäule durch ein Lenkschloß zu blockieren, das über einen Schließzylinder einen Sperriegel steuert, der in einer Ausnehmung der Lenkwelle bzw. eines auf der Lenkwelle befestigten Teiles in der Sperrstellung eingreift. Diese bekannten Konstruktionen können dazu führen, daß bei hoher Kraftaufwendung durch einen Unbefugten der Sperriegel oder andere daran angrenzenden Teile brechen. Ferner erfordert die Betätigung des Sperriegels im eingerasteten Zustand hohe Kräfte, wobei die bekannten Konstruktionen aufwendig in der Konstruktion und im Raumbedarf sind.

Aus der EP-A-0265826 ist es bekannt, die Lenksäule durch eine konische Fläche zu sperren, die durch einen Elektromotor in die sperrende Stellung bewegbar ist. Um ein Sperren zu bewirken, sind hohe Stellkräfte erforderlich, die durch den Motor aufgebracht werden müssen.

Aufgabe der Erfindung ist es, ein Lenkschloß der eingangs genannten Art so zu verbessern, daß bei einfacher Konstruktion und geringen Außenabmessungen in jeder Lenkradstellung ein Sperren erfolgt und das Sperren mit geringer Betätigungskraft einleitbar und aufhebbar ist.

Diese Aufgabe wird erfindungsgemäß dadurch gelöst, daß das Gesperre als Reibgesperre ausgebildet ist, das mehrere Reibflächen aufweist.

Da mehrere Reibflächen angeordnet sind, kann die Reibung pro Flächeneinheit gering sein, um eine Sperrung zu bewirken. Hierbei wird die sperrende Reibkraft desto größer, je stärker das Lenkrad vom Unbefugten gegen den entstehenden Widerstand gedreht wird. Um die Sperrwirkung und damit die Reibung einzuleiten, ist nur eine sehr geringe Kraft (Einleitkraft) erforderlich. Das gleiche gilt auch für die Kraft zum Aufheben der Reibsperrwirkung, so daß nur sehr geringe Kräfte erforderlich sind, um das Lenkschloß durch einen Schließzylinder, durch einen elektrischen, hydraulischen oder pneumatischen Antrieb oder ähnliche Mittel zu betätigen. Auch ist die Konstruktion von einfacher Bauart mit geringen Außenabmessungen und hoher Funktionssicherheit.

Vorteilhafte Ausgestaltungen der Erfindung sind in den Unteransprüchen angeführt.

Ein Ausführungsbeispiel der Erfindung ist in den Zeichnungen dargestellt und wird im folgenden näher beschrieben. Es Zeigen:

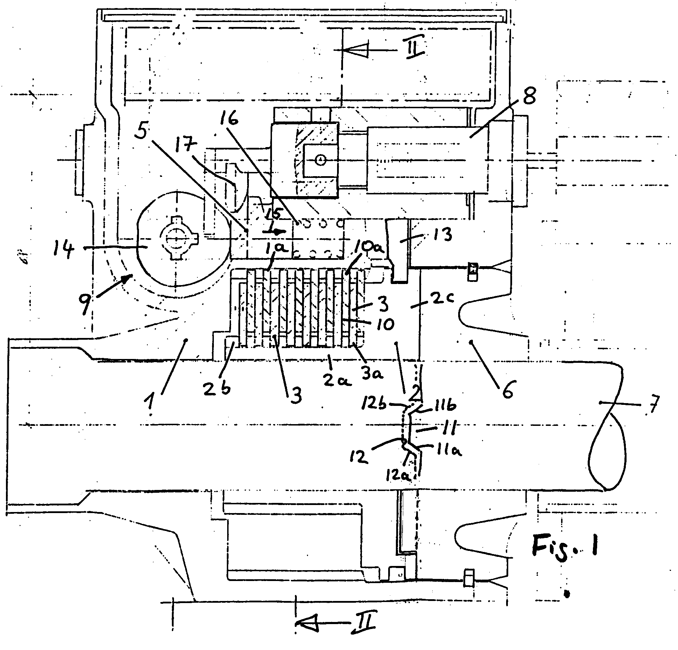

- Figur 1:: Einen achsialen Schnitt durch das Lenkschloß und

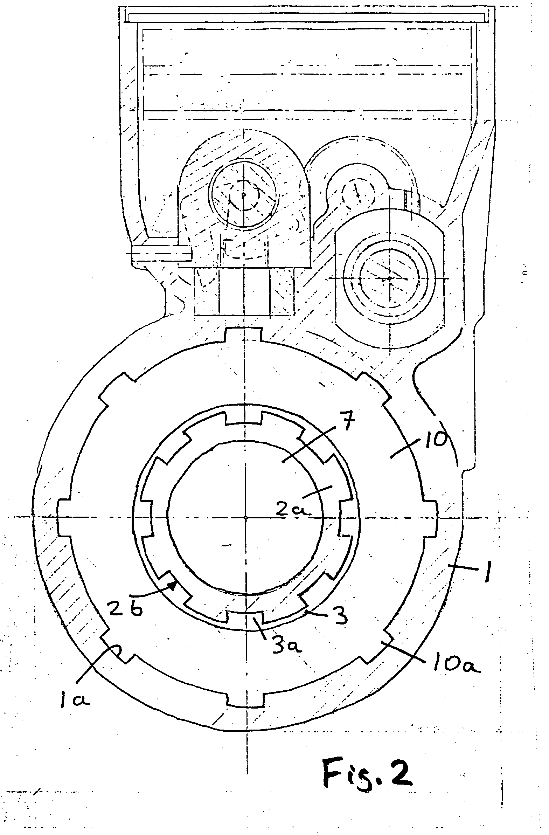

- Figur 2:: einen Schnitt nach II-II in Figur 1.

Die Lenkwelle 7 eines Lenkschlosses eines Kraftfahrzeuges ist von einem Schloßgehäuse 1 umgeben, in dem ferner ein Schließzylinder 8 und/oder ein Antrieb 9 gelagert ist. Im Ausführungsbeispiel wird die Hauptbetätigung des Lenkschlosses durch den elektrischen, pneumatischen oder hydraulischen Antrieb 9 durchgeführt, während der von Hand durch einen Schlüssel betätigte Schließzylinder 8 für Sonderfälle angeordnet ist.

Auf der Lenkwelle ist ein Teil 2 (Schlitten) koaxial gelagert und in achsialer Richtung verschieblich. Der Teil 2 ist gegenüber der Lenkwelle 7 drehfest angeordnet, so daß der Teil 2 mit der Lenkwelle 7 verdreht wird.

Der Teil 2 (Schlitten) weist einen hülsenförmigen Bereich 2a auf, auf dessen Außenseite ringförmige Lamellen 3 koaxial zum Bereich 2a und zur Lenkwelle 7 gelagert sind, wobei diese ringförmigen Lamellen 3 in die Ringöffnung nach innen hin vorstehende Vorsprünge 3a besitzen, die in Längsnuten 2b an der Außenseite des hülsenförmigen Bereiches 2a eingreifen. Hierdurch sind die Lenkwellenlamellen 3 drehfest am Teil 2 und damit an der Lenkwelle 7 gehalten, so daß sie durch die Lenkwelle 7 verdreht werden, wobei die ringförmigen Lenkwellenlamellen 3 achsial verschieblich sind.

Zwischen den ringscheibenförmigen Lenkwellenlamellen 3 liegen ringscheibenförmige Gehäuselamellen 10 ein, die drehfest im Gehäuse 1 gelagert und in achsialer Richtung verschieblich sind. Hierzu weisen die Gehäuselamellen 10 an der Peripherie Vorsprünge 10a auf, die in achsparallele Längsnuten 1a des Gehäuses gleiten. Beide Lamellenarten 3 und 10 bilden ein Lamellenpaket, das den hülsenförmigen Bereich 2a außen umgibt und durch einen flanschförmigen Bereich 2c des Teiles 2 auf einer Stirnseite druckbeaufschlagbar ist. Der Bereich 2c kann somit das Lamellenpaket zusammenpressen.

Der flanschförmige Bereich 2c des Teiles 2 liegt zwischen dem Lamellenpaket und einem Anpressnocken 6, der auf der Lenkwelle 7 fest ist und die Lenkwelle flanschförmig rundum umgibt. Der Anpressnocken 6 weist auf der dem Bereich 2c zugewandten Seite einen Vorsprung 11 auf, der zwei seitliche Schrägflächen 11a und 11b besitzt. Dieser Vorsprung 11 liegt in einer entsprechend geformten rusnehmung 12, des Bereichs 2c bzw., des Teiles 2 ein, wobei die Ausnehmung Schrägflächen 12a, 12b besitzt, die entsprechend den Schrägflächen des Vorsprungs 11 geformt und angeordnet sind, so daß bei einem Verdrehen des Anpressnockens 6 durch die Lenkwelle 7 in der ersten Drehrichtung die Schrägfläche 11a gegen die Schrägfläche 12a drückt, um hierdurch eine achsiale Bewegung des Teils 2 in eine Richtung zu erzeugen, die zu einem Zusammenpressen des Lamellenpaketes führt. Wird die Lenkwelle und damit der Anpressnocken in die entgegengesetzte Richtung gedreht, so drückt die Schrägfläche 11b gegen die Schrägfläche 12b und wiederrum wird das Teil 2 in dieselbe Richtung gedrückt. Die Teile 11 und 12 bilden also mit ihren Schrägflächen ein doppeltes Keilgetriebe. An dieser Stelle können auch andere Arten und Formen von Keil- oder Schraubengetrieben angeordnet werden.

Der flanschförmige Bereich 2c des Teils 2 wird durch einen Nocken 13 in achsialer Richtung verstellt. Der Nocken 13 wird von einem Vorsprung eines parallel zur Lenkwelle angeordneten und verschieblichen Mitnehmers 5 gebildet, wobei der Nocken 13 in einer außen angeordneten Ausnehmung des Bereichs 2c formschlüssig einliegt. Der Mitnehmer 5 wird im Ausführungsbeispiel sowohl durch den Steuernocken 14 als elektrischer, pneumatischer oder hydraulischer Antrieb in Richtung des Pfeiles 15 gegen den Druck einer Feder 16 betätigt.

In dieser Richtung bewegt der Mitnehmer 5 mit dem Nocken 13 den Bereich 2c des Teils 2 in die entsperrte Stellung, so daß die Reib- oder Klemmkräfte des Lamellenpakets aufgehoben werden.

In die gleiche Richtung wird der Mitnehmer 5 auch durch den Nocken 17 des Schließzylinders 8 gedrückt, so daß das Lenkschloß sowohl durch den Antrieb 9 als auch durch den Schließzylinder 8 entsperrbar ist.

Werden die Nocken 14 und 17 in eine Stellung gebracht, in der sie den Mitnehmer 5 nicht entgegen dem Druck der Feder 16 beaufschlagen, so befindet sich der Mitnehmer 5 in der Entsperrstellung und die Feder 16 drückt über den Nocken 13 und den Bereich 2c das Lemellenpaket gegen ein Gegenlager des Gehäuses zusammen. Die Feder 16 erzeugt somit einen anfänglichen, verhältnismäßig geringen Druck auf das Lamellenpaket, der dann beim Verdrehen des Lenkrades durch das Keilgetriebe wesentlich erhöht wird. Vor dem Drehen am Lenkrad durch einen Unbefugten ist also zunächst schon ein Vorspannmoment bzw. eine Vorspannkraft aufgebracht, und bei dem gewaltsamen Drehen durch den Unbefugten am Lenkrad erzeugt das Keilgetriebe eine Achsialkraft welche die Reibkräfte wesentlich erhöhen. Die Reibkräfte nehmen mit Zunahme des vom Unbefugten erzeugten Drehmomentes zu. Die Schräge des Keilgetriebes ist hierbei so ausgelegt, daß die erzeugte Achsialkraft ein Reibmoment aufbaut, das immer größer ist als das über das Lenkrad eingeleitete Moment.

Das Lenkschloß arbeitet damit wie folgt:

### Sperren:

Durch Schlüsselabzug wird der Mitnehmer 5 freigegeben. Die vorgespannte Feder 4 bewegt daraufhin den Schlitten 2. Dieser bringt auf das Lamellenpaket 3 eine definierte Axialkraft auf und erzeugt dadurch ein enstprechendes Sperrmoment. Beim Drehen der Lenkwelle 7 werden die Schrägen auf Anpressnocken 6 und Schlitten 2 gegeneinander verdreht. Dadurch wird eine Axialkraft erzeugt, die das Lamellenpaket 3 über den Schlitten 2 gegen das Gehäuse 1 presst. Bei entsprechender Auslegung der Schräge wird ein Sperrmoment erzeugt, das immer größer ist als das Aufdrehmoment.

### Entsperren:

Durch ein geeignetes Steuerelement wird über den Mitnehmer 5 der Schlitten 2 in einen Position gebracht, in der das Lamellenpaket 3 kraftfrei ist; gleichzeitig wird die Feder 4 vorgespannt.

## Patentansprüche

1. Lenkschloß für ein Kraftfahrzeug mit einem Gesperre, das bei abgestelltem Fahrzeug die Drehbarkeit der Lenkwelle (7) in beiden Drehrichtungen blockiert, **dadurch gekennzeichnet,** daß das Gesperre als Reibgesperre (2, 3, 10) ausgebildet ist, das mehrere Reibflächen aufweist.

2. Lenkschloß nach Anspruch 1, **dadurch gekennzeichnet,** daß die Reibung des Reibgesperres (2, 3, 10) durch ebene, schräge oder konusförmige Reibflächen erzeugt wird.

3. Lenkschloß nach Anspruch 2, **dadurch gekennzeichnet,** daß zu den ebenen Reibflächen die Lenkwellenachse senkrecht ist.

4. Lenkschloß nach Anspruch 2 oder 3, **dadurch gekennzeichnet,** daß die Reibflächen durch insbesondere ringscheibenförmige Lamellen (3, 10) gebildet werden.

5. Lenkschloß nach Anspruch 4, **dadurch gekennzeichnet,** daß an der Lenkwelle (7) Lamellen (3) direkt oder über Zwischenteile gelagert sind, die mit der Lenkwelle (7) verdrehbar sind, und zwischen diesen Lenkwellenlamellen (3) in abwechselnder Reihenfolge drehfeste Gehäuselamellen (10) gelagert sind.

6. Lenkschloß nach Anspruch 5, **dadurch gekennzeichnet,** daß die Lenkwellenlamellen (3) und die Gehäuselamellen (10) in einer zur Lenkwellenachse parallelen Richtung verschiebbar sind.

7. Lenkschloß nach einem der vorherigen Ansprüche 3 bis 6, **dadurch gekennzeichnet,** daß die Lenkwellenlamellen in einem achsial verschieblichen Teil (2) insbesondere Schlitten gelagert sind, der an der Lenkwelle (7) gegenüber dieser drehfest gelagert ist.

8. Lenkschloß nach Anspruch 7, **dadurch gekennzeichnet,** daß der Teil (2) in axialer Richtung der Lenkwelle (7) durch Drehen der Lenkwelle verschiebbar ist, wenn das Lenkschloß sich in der Sperrstellung befindet.

9. Lenkschloß nach Anspruch 8, **dadurch gekennzeichnet,** daß der Teil (2) beim Verschieben eine äußerste Lamelle (10) des Lamellenpakets druckbeaufschlagt.

10. Lenkschloß nach einem der Ansprüche 7 bis 9, **dadurch gekennzeichnet,** daß der Teil (2) durch die Schrägflächen ( 11a, 11b, 12a, 12b) eines Keil- oder Schraubengetriebes axial verschiebbar ist.

11. Lenkschloß nach Anspruch 10, **dadurch gekennzeichnet**, daß der Teil (2) erste Schrägflächen (12a, 12b) und die Lenkwelle (7) oder ein mit der Lenkwelle verbundenes Teil (6) (Anpressnocken) zweite, daran anliegende Schrägflächen (11a, 11b) aufweist.

12. Lenkschloß nach einem der vorhergehenden Ansprüche 7 bis 11, **dadurch gekennzeichnet**, daß der Teil (2) in die entsperrte Stellung durch einen Mitnehmer (5) bewegbar ist, der durch einen Schließzylinder (8) und/oder durch einen Antrieb (9) inbesondere über jeweils einen Nocken bewegbar ist.

13. Lenkschloß nach Anspruch 12, **dadurch gekennzeichnet**, daß der Mitnehmer (5) durch ein Federelement (16) in Richtung der Sperrstellung belastet ist.

## Claims

1. A steering lock for a motor vehicle having a locking mechanism, which when the vehicle is turned off prevents the rotation of the steering shaft (7) in both directions of rotation,
**characterised in that** the locking mechanism is constructed as a friction locking mechanism (2, 3, 10) having several friction areas.

2. A steering lock according to Claim 1,
**characterised in that** the friction of the friction locking mechanism (2, 3, 10) is produced by flat, inclined or conical friction areas.

3. A steering lock according to Claim 2,
**characterised in that** the steering shaft axis is perpendicular to the plane friction areas.

4. A steering lock according to Claim 2 or 3,
**characterised in that** the friction areas are formed by disks (3, 10) shaped in particular like annular disks.

5. A steering lock according to Claim 4,
**characterised in that** disks (3), which can be rotated with the steering shaft (7), are mounted directly or via intermediate parts on the steering shaft (7), and rotationally secure housing disks (10) are mounted between these steering shaft disks (3) in alternating sequence.

6. A steering lock according to Claim 5,
**characterised in that** the steering shaft disks (3) and the housing disks (10) are displaceable in a direction parallel to the steering shaft axis.

7. A steering lock according to one of the preceding Claims 3 to 6,
**characterised in that** the steering shaft disks are mounted in an axially displaceable part (2), in particular a slide, which is mounted on the steering shaft (7) in a rotationally secure manner in relation thereto.

8. A steering lock according to Claim 7,
**characterised in that** the part (2) is displaceable in the axial direction of the steering shaft (7) by rotating the steering shaft when the steering lock is located in the locked position.

9. A steering lock according to Claim 8,
**characterised in that** during displacement the part (2) pressurises an outermost disk (10) of the disk assembly.

10. A steering lock according to one of Claims 7 to 9,
**characterised in that** the part (2) is axially displaceable by the inclined surfaces (11a, 11b, 12a, 12b) of a wedge or helical gear.

11. A steering lock according to Claim 10,
**characterised in that** the part (2) has first inclined surfaces (12a, 12b) and the steering shaft (7) or a part (6) connected to the steering shaft (pressure cam) has second inclined surfaces (11a, 11b) adjacent thereto.

12. A steering lock according to one of the preceding Claims 7 to 11,
**characterised in that** the part (2) can be moved into the unlocked position by a carrier (5), which can be moved by a closing cylinder (8) and/or by a drive (9) in particular via a cam in each case.

13. A steering lock according to Claim 12,
**characterised in that** the carrier (5) is stressed by a spring element (16) towards the locked position.

## Revendications

1. Serrure de direction destinée à un véhicule automobile et comportant un dispositif d'encliquetage qui bloque la possibilité de rotation de l'arbre de direction (7) dans les deux sens de rotation lorsque le véhicule est en stationnement, caractérisée en ce que le dispositif d'encliquetage est réalisé sous la forme d'un dispositif d'encliquetage à friction (2, 3, 10) qui comporte plusieurs faces de friction.

2. Serrure de direction selon la revendication 1, caractérisée en ce que la friction du dispositif d'encliquetage à friction (2, 3, 10) est obtenue au moyen de faces de friction planes, obliques ou coniques.

3. Serrure de direction selon la revendication 2, caractérisée en ce que l'axe de l'arbre de direction est perpendiculaire aux faces de friction.

4. Serrure de direction selon la revendication 2 ou 3, caractérisée en ce que les faces de friction sont constituées par des lamelles (3, 10), en particulier en forme de rondelles annulaires.

5. Serrure de direction selon la revendication 4, caractérisée en ce que sur l'arbre de direction (7) sont montées, directement ou au moyen de pièces intermédiaires, des lamelles (3) qui sont disposées à rotation avec l'arbre de direction (7) et en ce que des lamelles de bâti (10), qui sont bloquées en rotation, sont montées de manière alternée entre ces lamelles d'arbre de direction (3).

6. Serrure de direction selon la revendication 5, caractérisée en ce que les lamelles d'arbre de direction (3) et les lamelles de bâti (10) sont disposées à translation selon une direction parallèle à l'axe de l'arbre de direction.

7. Serrure de direction selon l'une quelconque des revendications 3 à 6, caractérisée en ce que les lamelles d'arbre de direction sont montées dans une pièce (2) disposée à translation axiale, en particulier un coulisseau, qui est montée sur l'arbre de direction (7) avec blocage en rotation par rapport à ce dernier.

8. Serrure de direction selon la revendication 7, caractérisée en ce que la pièce (2) peut se déplacer en translation selon la direction axiale de l'arbre de direction (7) sous l'effet de la rotation de l'arbre de direction lorsque la serrure de direction se trouve en position de verrouillage.

9. Serrure de direction selon la revendication 8, caractérisée en ce que, lors de sa translation, la pièce (2) exerce une pression de butée sur une lamelle extrême (10) du paquet de lamelles.

10. Serrure de direction selon l'une quelconque des revendications 7 à 9, caractérisée en ce que la pièce (2) peut se déplacer en translation axiale au moyen des faces obliques (11a, 11b, 12a, 12b) d'un dispositif d'entraînement à clavette ou à vis.

11. Serrure de direction selon la revendication 10, caractérisée en ce que la pièce (2) comporte des premières faces obliques (12a, 12b) et en ce que l'arbre de direction (7), ou une pièce (6) (came de pression) reliée à l'arbre de direction, comporte des secondes faces obliques (11a, 11b) qui sont en contact avec ces dernières.

12. Serrure de direction selon l'une quelconque des revendications 7 à 11, caractérisée en ce que, dans la position de déverrouillage, la pièce (2) peut se déplacer au moyen d'un entraîneur (5) qui peut se déplacer au moyen d'un cylindre de fermeture (8) et/ou au moyen d'un dispositif d'actionnement (9), en particulier par l'intermédiaire, à chaque fois, d'une came.

13. Serrure de direction selon la revendication 12, caractérisée en ce que l'entraîneur (5) est soumis à l'action d'un élément de ressort (16) dans la direction de la position de verrouillage.
